# EUROPEAN PATENT SPECIFICATION

(11) **EP 4 446 724 B1**
(45) Date of publication and mention of the grant of the patent: **05.08.2026**
(21) Application number: 24170005.3
(22) Date of filing: 12.04.2024
(51) Int. Cl.: G01N 1/30, G01N 1/36

(54) **METHOD OF ACCELERATED HISTOLOGICAL TISSUE PROCESSING**
VERFAHREN ZUR BESCHLEUNIGTEN VERARBEITUNG HISTOLOGISCHER GEWEBE
PROCEDE DE TRAITEMENT HISTOLOGIQUE ACCELERE DE TISSUS

(30) Priority: 14.04.2023 US 202363459483 P
(43) Date of publication of application: 16.10.2024
(73) Proprietor: Leica Biosystems Richmond, Inc., Richmond, Illinois 60071 (US)
(72) Inventor: FITZL, Robin, Richmond, 60071 (US)
(74) Representative: Simmons & Simmons

(56) References cited:
- US-A1- 2009 136 992
- US-A1- 2013 095 473
- US-A1- 2021 389 216

## Description

### BACKGROUND

### Field of the Invention

This disclosure is directed to the field of tissue processing and methods thereof, for example, that can be used in high throughput applications for histology.

Conventional histology processing protocols consist of four groups of reagents to provide fixation, dehydration, clearing, and infiltration. Of these, it is common to use catalysts such as heat, pressure, and/or vacuum on these protocols that usually consist of 12 steps. Some processors are equipped with a stirrer or some type of option to agitate the fluid. The shortcomings of traditional processors make it extremely difficult to eliminate heat or increase the rate of fluid perfusion. Therefore, there remains a need for improved methods of tissue processing that address and overcome these shortcomings while providing comparable or even superior results and still remaining compatible with standard reagents, equipment, and staining protocols.

### SUMMARY

The present invention provides a method of processing a tissue sample, for example an accelerated protocol, for use in histology.

For example, a method of processing a tissue sample of this disclosure comprises the steps of (i) to (xii):
(i)(a) contacting the tissue sample with neutral-buffered formalin (NBF) at a temperature of from about 18 °C to about 27 °C, optionally, under pressure/vacuum (P/V) of from -70 kPa(g) to 0 kPa(g), with agitation, and (i)(b) removing the NBF from the tissue sample, optionally allowing for a drip time of about 5, 10, 15, 20, 25, or 30 seconds before further processing. In certain embodiments, the concentration of NBF is between about a 6% and 14% NBF solution, between about a 7% and 13% NBF solution, between about a 8% and 12% NBF solution, or between about a 9% and 11% NBF solution; optionally, wherein the concentration of NBF is about a 10% NBF solution. In certain embodiments, the agitation is medium or high. And, in certain embodiments, the tissue sample is contacted with the NBF for about 1 minute and after about 1 minute removing the NBF from the tissue sample. In certain other embodiments, a tissue fixation medium other than NBF, such as paraformaldehyde, may be used.
(ii)(a) contacting the tissue sample with ethanol for about 20 minutes to about 45 minutes, optionally about 30 minutes, at a temperature of from about 18 °C to about 27 °C, optionally, under pressure/vacuum (P/V) of from -70 kPa(g) to 0 kPa(g), with agitation, and (ii)(b) after about 15 minutes to about 45 minutes, removing the ethanol from the tissue sample, optionally allowing for a drip time of about 5, 10, 15, 20, 25, or 30 seconds before further processing. In certain embodiments, the ethanol is between about 65% and 75% ethanol, between about 66% and 74% ethanol, between about 67% and 73% ethanol, between about 68% and 72% ethanol; or between about 69% and 71% ethanol; optionally, wherein the ethanol is about 70% ethanol. And, in certain embodiments, the agitation is medium or high.
(iii)(a) contacting the tissue sample with ethanol for about 15 minutes to about 45 minutes, optionally about 25 minutes, at a temperature of from about 18 °C to about 27 °C, optionally, under pressure/vacuum (P/V) of from -70 kPa(g) to 0 kPa(g), with agitation, and (iii)(b) after about 15 minutes to about 45 minutes, removing the ethanol from the tissue sample, optionally allowing for a drip time of about 5, 10, 15, 20, 25, or 30 seconds before further processing. In certain embodiments, the ethanol is between about 85% and 95% ethanol, between about 86% and 94% ethanol, between about 87% and 93% ethanol, between about 88% and 92% ethanol; or between about 89% and 91% ethanol; optionally, wherein the ethanol is about 90% ethanol. And, in certain embodiments, the agitation is medium or high.
(iv)(a) contacting the tissue sample with ethanol for about 15 minutes to about 45 minutes, optionally about 25 minutes, at a temperature of from about 18 °C to about 27 °C, optionally, under pressure/vacuum (P/V) of from -70 kPa(g) to 0 kPa(g), with agitation, and (iv)(b) after about 15 minutes to about 45 minutes, removing the ethanol from the tissue sample, optionally allowing for a drip time of about 5, 10, 15, 20, 25, or 30 seconds before further processing. In certain embodiments, the ethanol is at least about 95% ethanol, at least about 96% ethanol, at least about 97% ethanol, at least about 98% ethanol, or at least about 99% ethanol; optionally, wherein the ethanol is about 100% ethanol. An, in certain embodiments, the agitation is medium or high.
(v)(a) contacting the tissue sample with ethanol for about 15 minutes to about 45 minutes, optionally about 25 minutes, at a temperature of from about 18 °C to about 27 °C, optionally, under pressure/vacuum (P/V) of from -70 kPa(g) to 0 kPa(g), with agitation, and (v)(b) after about 15 minutes to about 45 minutes, removing the ethanol from the tissue sample, optionally allowing for a drip time of about 5, 10, 15, 20, 25, or 30 seconds before further processing. In certain embodiments, the ethanol is at least about 95% ethanol, at least about 96% ethanol, at least about 97% ethanol, at least about 98% ethanol, or at least about 99% ethanol; optionally, wherein the ethanol is about 100% ethanol. And, in certain embodiments, the agitation is medium or high.
(vi)(a) contacting the tissue sample with ethanol for about 15 minutes to about 45 minutes, optionally about 25 minutes, at a temperature of from about 18 °C to about 27 °C, optionally, under pressure/vacuum (P/V) of from -70 kPa(g) to 0 kPa(g), with agitation, and (vi)(b) after about 15 minutes to about 45 minutes, removing the ethanol from the tissue sample, optionally allowing for a drip time of about 5, 10, 15, 20, 25, or 30 seconds before further processing. In certain embodiments, the ethanol is at least about 95% ethanol, at least about 96% ethanol, at least about 97% ethanol, at least about 98% ethanol, or at least about 99% ethanol; optionally, wherein the ethanol is about 100% ethanol. And, in certain embodiments, the agitation is medium or high.
(vii)(a) contacting the tissue sample with xylene for about 10 minutes to about 45 minutes, optionally about 20 minutes, at a temperature of from about 43 °C to about 47 °C, optionally at about 45° C, optionally, under pressure/vacuum (P/V) of from -70 kPa(g) to 0 kPa(g), with agitation, and (vii)(b) after about 10 minutes to about 45 minutes, removing the xylene from the tissue sample, optionally allowing for a drip time of about 5, 10, 15, 20, 25, or 30 seconds before further processing. In certain embodiments, the xylene is at least about 95% xylene, at least about 96% xylene, at least about 97% xylene, at least about 98% xylene, or at least about 99% xylene; optionally, wherein the xylene is about 100% xylene. And, in certain embodiments, the agitation is medium or high.
(viii)(a) contacting the tissue sample with xylene for about 10 minutes to about 45 minutes, optionally about 20 minutes, at a temperature of from about 43 °C to about 47 °C, optionally at about 45° C, optionally, under pressure/vacuum (P/V) of from -70 kPa(g) to 0 kPa(g), with agitation, and (viii)(b) after about 10 minutes to about 45 minutes, removing the xylene from the tissue sample, optionally allowing for a drip time of about 5, 10, 15, 20, 25, or 30 seconds before further processing. In certain embodiments, the xylene is at least about 95% xylene, at least about 96% xylene, at least about 97% xylene, at least about 98% xylene, or at least about 99% xylene; optionally, wherein the xylene is about 100% xylene. And, in certain embodiments, the agitation is medium or high.
(ix)(a) contacting the tissue sample with xylene for about 25 minutes to about 50 minutes, optionally about 40 minutes, at a temperature of from about 43 °C to about 47 °C, optionally at about 45° C, optionally, under pressure/vacuum (P/V) of from -70 kPa(g) to 0 kPa(g), with agitation, and (ix)(b) after about 20 minutes to about 50 minutes, removing the xylene from the tissue sample, optionally allowing for a drip time of about 5, 10, 15, 20, 25, or 30 seconds before further processing. In certain embodiments, the xylene is at least about 95% xylene, at least about 96% xylene, at least about 97% xylene, at least about 98% xylene, or at least about 99% xylene; optionally, wherein the xylene is about 100% xylene. And, in certain embodiments, the agitation is medium or high.
(x)(a) contacting the tissue sample with paraffin for about 15 minutes to about 45 minutes, optionally about 25 minutes, at a temperature of from about 60 °C to about 70 °C, optionally at about 65 °C, under a vacuum, optionally under pressure/vacuum (P/V) of 0 to +45 kPa(g), with agitation, and (x)(b) after about 15 minutes to about 45 minutes, removing the paraffin from the tissue sample, optionally allowing for a drip time of about 5, 10, 15, 20, 25, or 30 seconds before further processing. In certain embodiments, the agitation is medium or high.
(xi)(a) contacting the tissue sample with paraffin for about 15 minutes to about 45 minutes, optionally about 25 minutes, at a temperature of from about 60 °C to about 70 °C, optionally at about 65 °C, under a vacuum, optionally under pressure/vacuum (P/V) of 0 to +45 kPa(g), with agitation, and (xi)(b) after about 15 minutes to about 45 minutes, removing the paraffin from the tissue sample, optionally allowing for a drip time of about 5, 10, 15, 20, 25, or 30 seconds before further processing. In certain embodiments, the agitation is medium or high.
(xii)(a) contacting the tissue sample with paraffin for about 15 minutes to about 45 minutes, optionally about 25 minutes, at a temperature of from about 60 °C to about 70 °C, optionally at about 65 °C, under a vacuum, optionally, under pressure/vacuum (P/V) of 0 to +45 kPa(g), with agitation, and (xii)(b) after about 15 minutes to about 45 minutes, removing the paraffin from the tissue sample, optionally allowing for a drip time of about 5, 10, 15, 20, 25, or 30 seconds before further processing. In certain embodiments, the agitation is medium or high.

The method of the present invention is defined in claim 1.

### BRIEF DESCRIPTION OF THE DRAWINGS/FIGURES

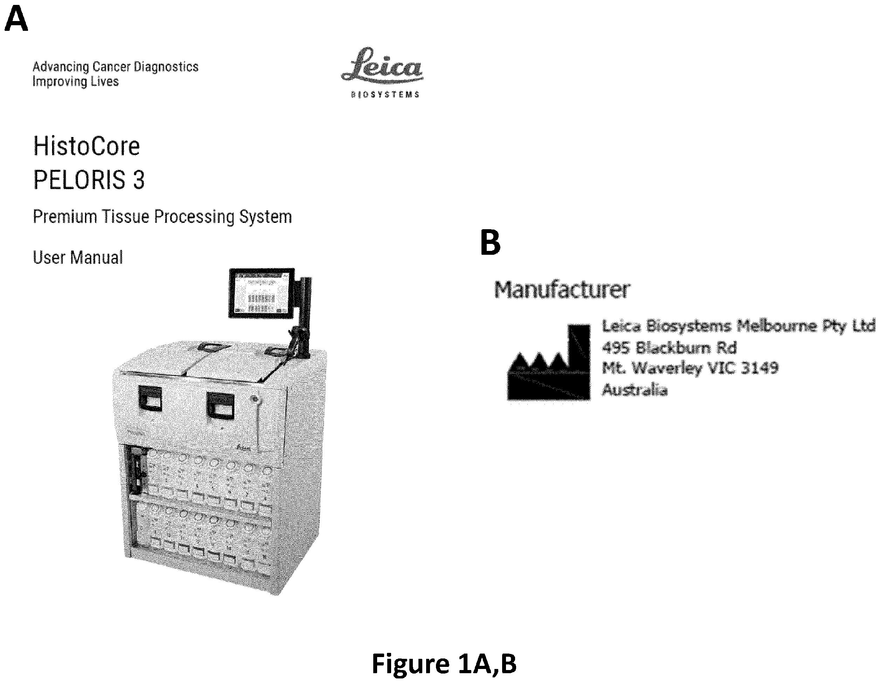

**Figure 1A****,B.** **Figure 1** shows the cover page of the User Manual for the HistoCore PELORIS 3 Tissue Processor (LEICA BIOSYSTEMS MELBOURNE PTY LTD.)

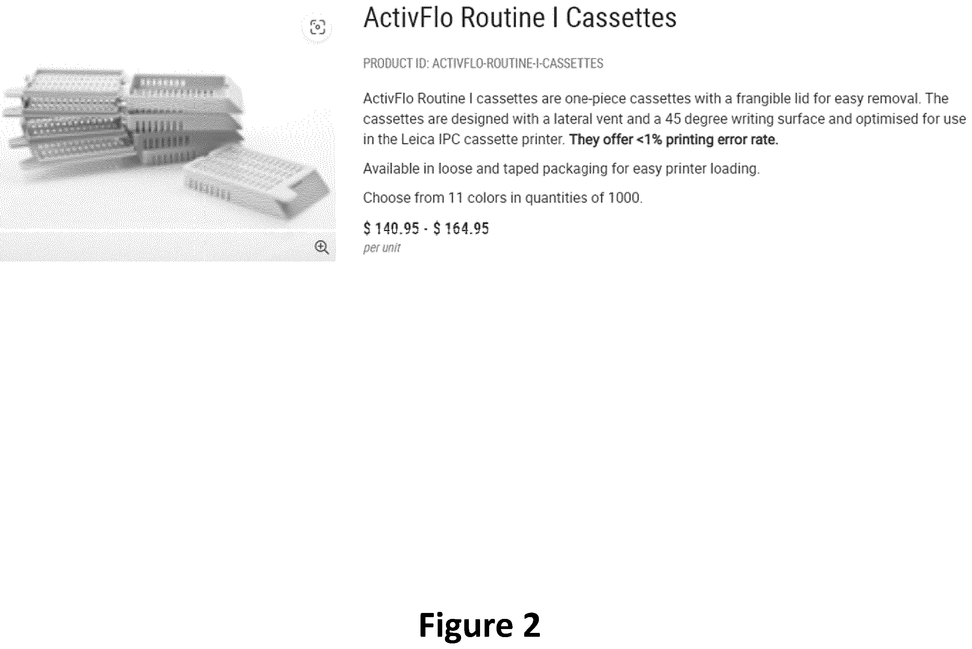

**Figure 2. Figure 2** shows examples of IP ActivFlo Routine I cassettes (LEICA BIOSYSTEMS, Richmond, IL).

### DETAILED DESCRIPTION

### Definitions

It is to be noted that the term "a" or "an" entity refers to one or more of that entity; for example, "a tissue sample," is understood to represent one or more tissue samples. As such, the terms "a" (or "an"), "one or more," and "at least one" can be used interchangeably herein.

Furthermore, "and/or" where used herein is to be taken as specific disclosure of each of the specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following embodiments: A, B, and C; A, B, or C; A or C; A or B; B or C; A and C; A and B; B and C; A (alone); B (alone); and C (alone).

It is understood that wherever aspects are described herein with the language "comprising" or "comprises" otherwise analogous aspects described in terms of "consisting of," "consists of," "consisting essentially of," and/or "consists essentially of," and the like are also provided.

Unless defined otherwise, technical and scientific terms used herein have the same meaning as commonly understood by one of ordinary skill in the art to which this disclosure is related.

Numeric ranges are inclusive of the numbers defining the range. Even when not explicitly identified by "and any range in between," or the like, where a list of values is recited, e.g., 1, 2, 3, or 4, unless otherwise stated, the disclosure specifically includes any range in between the values, e.g., 1 to 3, 1 to 4, 2 to 4, etc.

The headings provided herein are solely for ease of reference and are not limitations of the various aspects or aspects of the disclosure, which can be had by reference to the specification as a whole.

As used herein, "ActivFlo" refers to a line of histology cassettes sold by Leica Biosystems (LBS) with a lateral vent design.

As used herein, "SPECTRA S2" is a validated Leica H&E Staining System.

As used herein, "HistoCore SPECTRA" is a Leica automated H&E Stainer.

As used herein, "HistoCore PELORIS 3" is a Dual Retort Rapid Tissue Processor.

As used herein, "neutral-buffered formalin (NBF)" refers to standard formulations comprising formaldehyde, water, and phosphate buffers known in the art, such as are commercially available. Some embodiments may also contain methanol. For example, some embodiments utilize 10% NBF, which is a standard in histology where a 10% solution of formaldehyde concentration (37% w/v) and water is prepared and buffered to maintain a pH of about 7.2.

Where the term "about" is used, e.g., about 30 minutes or about 70% ethanol, it is understood that the value recited is also included. Further, where the term "about" precedes multiple numbers, for efficiency, all the numbers are qualified by "about," even if each number is not directly preceded by "about," unless explicitly defined otherwise. For example, "a time of about 5, 10, 15, 20, 25, or 30 seconds" should be construed as "a time of about 5, about 10, about 15, about 20, about 25, or about 30 seconds." For example, "a concentration between about a 6% and 14%" should be construed as "a concentration between about 6% and about 14%."

As used herein, "drip" refers to the actual drip time following draining a reagent from a sample (and in some cases, from cassettes, biopsy pads, etc.).

### Overview

Provided for herein is an accelerated tissue processing protocol, e.g., xylene tissue processing. While the accelerated tissue processing protocol of this disclosure is in a format common in histology, and compatible with commercially available tissue processors, what makes the system unique is that through a novel series of alcohol grading and time, the process is more efficient (i.e., takes less time) and requires less heat. In certain embodiments, the addition of agitating the sample (such as stirring) is used to enhance the efficiency and reduction of heat. Thus, the tissue processing protocol of this disclosure provides significant advantages in processing time.

For example, in certain embodiments, the accelerated protocol has a total processing time of less than about 6 hours, less than about 5.5 hours, or less than about 5 hours, or for example, less than about 6.5 hours, less than about 6 hours, or less than about 5.5 hours when fill and drain times are included. In certain embodiments, the accelerated protocol has a total processing time of about 5 hours or about 5.5 hours when fill and drain times are included. In contrast, comparable standard protocols for processing tissue samples currently require around 10 to 14 or more hours. Thus, in certain embodiments, the accelerated protocol has a total processing time that is at least about 33% less, 40% less, 50% less, 55% less, 60% less, or 67% less than a comparable standard protocol either compared with or without fill and drain times. Examples of comparable standard protocols include protocols for processing the same size and/or type of tissue sample and/or for the same downstream processing/histology use.

The accelerated protocol is suitable for clinical and research applications. The disclosed methods provide for processing a tissue sample for use in histology. Applications include for clinical human and non-human, including companion animals, diagnostic and prognostic histology testing. Applications also include research applications for human and non-human samples. Such protocol can be used in processing a number of tissues, for example including but not limited to breast, colon, uterine, kidney, pancreas, liver, lung, skin, fat, muscle, connective tissue, bone, prostate, testicle, ovary, adrenal, thyroid, parotid, salivary gland, lymph node, and gastrointestinal samples.

The sample may be of a variety of dimension known to those skilled in the art of histology and related processing, such as for hematoxylin and eosin (H&E) staining and the like. For example for standard surgical specimens, sections can be prosected at a recommended maximum of 33 x 26 x 5 mm. Samples can be smaller, e.g., as small as 20 x 10 x 3 mm. Thus, in certain embodiments, the sample size can be anywhere in between about 20 x 10 x 3 mm and about 33 x 26 x 5 mm. For example, in certain embodiments, the sample has dimensions of about 25 x 20 x 3 mm. For example, in certain embodiments, the sample has dimensions of about 20 x 20 x 4 mm. One advantage of the present disclosure is that samples that exceed the recommended size can still be processed, often adequately, minimizing the risk of reprocessing (within the range of time).

The process can significantly eliminate the heat usually applied during the reagent steps, which better preserves nucleotides and sensitive epitopes. In certain embodiments, the process eliminates at least about 25%, 33%, 40%, 50%, 60%, or 70% of the heat usually applied during any individual step. In certain embodiments, the process eliminates up to about 75%, 80%, 85%, 90%, 95%, or up to around 100% of the heat usually applied during any individual step. In certain embodiments, the process eliminates at least about 25%, 33%, 40%, 50%, 60%, or 70% of the heat usually applied cumulatively during the process. In certain embodiments, the process eliminates up to about 67%, 75%, 80%, or 90% of the heat usually applied cumulatively during the process.

Certain embodiments provide for a twelve-step accelerated tissue processing protocol. One of ordinary skill in the art would recognize that common commercial tissue processing systems commonly utilize twelve-step protocols and thus the protocol of this disclosure is compatible with aspects of commonly used systems. One of ordinary skill in the art would recognize that fewer steps could be utilized but doing so may be counterproductive to efficiency as it could increase the time spent changing out expired reagents. However, using fewer steps in combination with the inventive features of this disclosure is also contemplated.

One aspect of the present disclosure is agitation of the reagents in contact with the tissue sample. Agitation can be applied by a variety of methods such as stirring, rocking, and swirling. One of ordinary skill in the art will recognize that the amount of agitation can be varied in various steps, for example, the stirring speed can be varied, e.g., a medium stirring speed in some steps and a high stirring speed in other steps. Altering the agitation between a high level and a lesser level can allow for the processing of delicate tissue that may not be able to withstand a high amount of agitation/stirrer speed during all steps. However, in some embodiments, a high level of agitation can be used for half or more (e.g., 6, 7, 8, 9, 10, 11, or 12) of the steps. In some embodiments, a high level of agitation can be used for all (e.g., 12) or nearly all (e.g., 9, 10, or 11) of the steps. Thus, certain embodiments require a setup that allows for varying the amount of agitation used. For example, the protocol is well-suited for use with the HistoCore PELORIS 3 Tissue Processor, because it comprises a large, heavy metal stirrer that has three speeds (factory protocols are defaulted to medium). In contrast, other commercial processors have only a small plastic stirrer at a set speed or no stirrer at all. However, it is understood that the protocol is not limited to use on a HistoCore PELORIS 3 Tissue Processor and could be used with any apparatus that provides for agitation/stirring or done manually. For example, on a tissue processor that provides for alteration between low, medium, and high stirring speeds.

One aspect of the present disclosure is the step of contacting a reagent with the tissue sample. One of ordinary skill in the art will understand that there are multiple ways of contacting a reagent with a sample. For example, dipping a sample into a container of reagent or pouring or pumping a reagent into a container, chamber, or retort holding a sample. In certain embodiments, the step of contacting can be performed by a processor. For example, cassettes holding tissue samples are loaded into a basket that holds multiple cassettes, the basket is loaded into a retort which can hold multiple baskets, and reagent can be pumped into the retort to contact the samples from multiple stations at the corresponding processing step.

One aspect of the present disclosure is the step of removing a reagent from contact with the tissue sample, e.g., prior to the next step of contacting the tissue sample with the next reagent. Removing a reagent can be accomplished, for example, by pouring or draining away the reagent and/or pumping the reagent out of a chamber containing a sample. While it is desirable to remove as much reagent as possible, it is understood that some amount of reagent carryover is acceptable, expected, and accounted for in the process, and by "removing," it is not necessary that all of the prior reagent be removed before the following step. For example, in certain embodiments where the tissue sample sits in a chamber or retort filled with a reagent, the reagent is pumped out and as much reagent as possible is drained off of the sample during a "drip time" before the next reagent is pumped in. In certain embodiments, a vacuum may be applied to aid in removing the reagent, for example during a paraffin step to remove residual xylene. It has been observed that using ActivFlo cassettes aid in less carryover which can translate to less reagent exchange time. While a wash step (such as using water or a wash buffer) may be employed between the twelve reagent steps, such wash steps are not necessary (some amount of reagent carry over is expected and accounted for) and increase the time, cost, and complexity of the process, generally without appreciable improvement.
(i) In certain embodiments, the first step of the method comprises (i)(a), contacting the tissue sample with neutral-buffered formalin (NBF). One of ordinary skill in the art would recognize that tissue fixation medium other than NBF, such as paraformaldehyde, may be used and are thus contemplated herein for use consistent with the use of NBF and adjusted to adjusted to the properties of each such tissue fixation medium, such as paraformaldehyde. One of ordinary skill in the art would recognize that NBF is commonly used in tissue processing as a 10% NBF solution. Thus, in certain embodiments, the NBF is between about a 6% and 14% NBF solution, between about a 7% and 13% NBF solution, between about a 8% and 12% NBF solution, or between about a 9% and 11% NBF solution. In certain embodiments, the NBF is about a 10% NBF solution. One of ordinary skill in the art would understand that the time of NBF contact for this first step can be determined by the user in alignment with best practices, recommendations, and/or requirements by regulatory agencies, e.g., CAP, CLIA, JACHO. For example, in certain embodiments, the tissue sample is contacted for about 30 seconds, 45 seconds, 60 seconds (1 minute), 75 seconds, 90 seconds, 105 seconds, 120 seconds (2 minutes), or any time or range in between, inclusive of the end points. In certain embodiments, the tissue sample is contacted for about 45 seconds to about 75 seconds. In certain embodiments, the tissue sample is contacted for about 50 seconds to about 70 seconds. In certain embodiments, the tissue sample is contacted for about 55 seconds to about 65 seconds. In certain embodiments, the tissue sample is contacted for about 1 minute. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between, inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this first step with agitation. In certain embodiments, tissue sample is contacted in this first step with medium or high agitation as described in detail elsewhere herein. In certain embodiments, the tissue sample is contacted in this first step with medium agitation. (i)(b) After contact under the conditions of (i)(a), the NBF is removed from the tissue sample. In certain embodiments, the NBF is removed from the tissue sample after contact for an amount of time disclosed in (i)(a). As discussed in detail elsewhere herein, removal does not mean that 100% of the NBF is removed and some can remain on the sample. In certain embodiments, remaining NBF is allowed to drip from the sample for a drip time of about 5, 10, 15, 20, 25, or 30 seconds before further processing. For example, in certain embodiments, remaining NBF is allowed to drip from the sample for a drip time of about 10 seconds before further processing.
(ii) In certain embodiments, the next step of the method comprises (ii)(a), contacting the tissue sample with ethanol. One of ordinary skill in the art would recognize that ethanol is commonly used in tissue processing at 70%. Thus, in certain embodiments, the ethanol is between about 65% and 75% ethanol, between about 66% and 74% ethanol, between about 67% and 73% ethanol, between about 68% and 72% ethanol, or between about 69% and 71% ethanol. In certain embodiments, the ethanol in this step is about 70% ethanol. The tissue sample is contacted with the ethanol for about 20, 25, 30, 35, 40, 45, 50, 55, or 60 minutes or any time or range in between, inclusive of the endpoints. In certain embodiments, the tissue sample is contacted for a time of about 20 minutes to about 45 minutes. In certain embodiments, the tissue sample is contacted for a time of about 25 minutes to about 35 minutes. In certain embodiments, the tissue sample is contacted for a time of about 27 minutes to about 33 minutes. In certain embodiments, the tissue sample is contacted for a time of about 28 minutes to about 32 minutes. In certain embodiments, the tissue sample is contacted for a time of about 30 minutes. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between and inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this second step with agitation. In certain embodiments, the tissue sample is contacted in this second step with medium or high agitation as described in detail elsewhere herein. In certain embodiments, the tissue sample is contacted in this second step with medium agitation. (ii)(b) After contact under the conditions and for an amount of time disclosed in (ii)(a), the ethanol is removed from the tissue sample. As discussed in detail elsewhere herein, removal does not mean that 100% of the ethanol is removed and some can remain on the sample. In certain embodiments, remaining ethanol is allowed to drip from the sample for a drip time of about 5, 10, 15, 20, 25, or 30 seconds before further processing. For example, in certain embodiments, remaining ethanol is allowed to drip from the sample for a drip time of about 10 seconds before further processing.
(iii) In certain embodiments, the next step of the method comprises (iii)(a), contacting the tissue sample again with ethanol. One of ordinary skill in the art would recognize that ethanol is also commonly used in tissue processing at 90%. Thus, in certain embodiments, the ethanol is between about 85% and 95% ethanol, between about 86% and 94% ethanol, between about 87% and 93% ethanol, between about 88% and 92% ethanol, or between about 89% and 91% ethanol. In certain embodiments, the ethanol in this step is about 90% ethanol. The tissue sample is contacted with the ethanol for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between and inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this third step with agitation. In certain embodiments, the tissue sample is contacted in this third step with medium or high agitation as described in detail elsewhere herein. In certain embodiments, the tissue sample is contacted in this third step with high agitation. (iii)(b) After contact under the conditions and for an amount of time disclosed in (iii)(a), the ethanol is removed from the tissue sample. As discussed in detail elsewhere herein, removal does not mean that 100% of the ethanol is removed and some can remain on the sample. In certain embodiments, remaining ethanol is allowed to drip from the sample for a drip time of about 5, 10, 15, 20, 25, or 30 seconds before further processing. For example, in certain embodiments, remaining ethanol is allowed to drip from the sample for a drip time of about 10 seconds before further processing.
(iv) In certain embodiments, the next step of the method comprises (iv)(a), contacting the tissue sample again with ethanol. One of ordinary skill in the art would recognize that ethanol is also commonly used in tissue processing at 100%. Thus, in certain embodiments, the ethanol is at least about 95% ethanol, at least about 96% ethanol, at least about 97% ethanol, at least about 98% ethanol, or at least about 99% ethanol. In certain embodiments, the ethanol in this step is about 100% ethanol. The tissue sample is contacted with the ethanol for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between and inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this fourth step with agitation. In certain embodiments, the tissue sample is contacted in this fourth step with medium or high agitation as described in detail elsewhere herein. In certain embodiments, the tissue sample is contacted in this fourth step with medium agitation. (iv)(b) After contact under the conditions and for an amount of time disclosed in (iv)(a), the ethanol is removed from the tissue sample. As discussed in detail elsewhere herein, removal does not mean that 100% of the ethanol is removed and some can remain on the sample. In certain embodiments, remaining ethanol is allowed to drip from the sample for a drip time of about 5, 10, 15, 20, 25, or 30 seconds before further processing. For example, in certain embodiments, remaining ethanol is allowed to drip from the sample for a drip time of about 10 seconds before further processing.
(v) In certain embodiments, the next step of the method comprises (v)(a) contacting the tissue sample again with ethanol. One of ordinary skill in the art would recognize that ethanol is commonly used in tissue processing at 100%. Thus, in certain embodiments, the ethanol is at least about 95% ethanol, at least about 96% ethanol, at least about 97% ethanol, at least about 98% ethanol, or at least about 99% ethanol. In certain embodiments, the ethanol in this step is about 100% ethanol. The tissue sample is contacted with the ethanol for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between and inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this fifth step with agitation. In certain embodiments, the tissue sample is contacted in this fifth step with medium or high agitation as described in detail elsewhere herein. In certain embodiments, the tissue sample is contacted in this fifth step with high agitation. (v)(b) After contact under the conditions and for an amount of time disclosed in (v)(a), the ethanol is removed from the tissue sample. As discussed in detail elsewhere herein, removal does not mean that 100% of the ethanol is removed and some can remain on the sample. In certain embodiments, remaining ethanol is allowed to drip from the sample for a drip time of about 5, 10, 15, 20, 25, or 30 seconds before further processing. For example, in certain embodiments, remaining ethanol is allowed to drip from the sample for a drip time of about 10 seconds before further processing.
(vi) In certain embodiments, the next step of the method comprises (vi)(a) contacting the tissue sample again with ethanol. One of ordinary skill in the art would recognize that ethanol is commonly used in tissue processing at 100%. Thus, in certain embodiments, the ethanol is at least about 95% ethanol, at least about 96% ethanol, at least about 97% ethanol, at least about 98% ethanol, or at least about 99% ethanol. In certain embodiments, the ethanol in this step is about 100% ethanol. The tissue sample is contacted with the ethanol for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 16 °C, 17 °C, 18 °C, 19 °C, 20 °C, 21 °C, 22 °C, 23 °C, 24 °C, 25 °C, 26 °C, 27 °C, or 28 °C, or any range in between and inclusive of the endpoints. For example, in certain embodiments, the temperature is from about 18 °C to about 27 °C. In certain embodiments, the tissue sample is contacted at a pressure/vacuum (P/V) of from -70 kPa(g) to 0 kPa(g). The tissue sample is contacted in this sixth step with agitation. In certain embodiments, the tissue sample is contacted in this sixth step with medium or high agitation as described in detail elsewhere herein. In certain embodiment, the tissue sample is contacted in this sixth step with medium agitation. (vi)(b) After contact under the conditions and for an amount of time disclosed in (vi)(a), the ethanol is removed from the tissue sample. As discussed in detail elsewhere herein, removal does not mean that 100% of the ethanol is removed and some can remain on the sample. In certain embodiments, remaining ethanol is allowed to drip from the sample for a drip time of about 5, 10, 15, 20, 25, or 30 seconds before further processing. For example, in certain embodiments, remaining ethanol is allowed to drip from the sample for a drip time of about 10 seconds before further processing.
(vii) In certain embodiments, the next step of the method comprises (vii)(a) contacting the tissue sample with xylene or a xylene alternative. One of ordinary skill in the art would recognize that xylene or alternative is commonly used in tissue processing at 100%. Thus, in certain embodiments, the xylene or alternative is at least about 95%, at least about 96%, at least about 97%, at least about 98%, or at least about 99%. In certain embodiments, the xylene or alternative is about 100%. In certain embodiments, recycled xylene can be use without effect. In certain embodiments, xylene substitutes or isopropanol may be substituted for xylene in this step. The tissue sample is contacted with the xylene or a xylene alternative for about 10, 15, 20, 25, 30, 35, 40, 45, or 50 minutes or any time or range in between, inclusive of the endpoints. In certain embodiments, the tissue sample is contacted for a time of about 10 minutes to about 30 minutes. In certain embodiments, the tissue sample is contacted for a time of about 15 minutes to about 25 minutes. In certain embodiments, the tissue sample is contacted for a time of about 17 minutes to about 23 minutes. In certain embodiments, the tissue sample is contacted for a time of about 18 minutes to about 22 minutes. In certain embodiments, the tissue sample is contacted for a time of about 20 minutes. The tissue sample is contacted at a temperature of about 40 °C, 41 °C, 42 °C, 43 °C, 44 °C, 45 °C, 46 °C, 47 °C, 48 °C, 49 °C, or 50 °C, or any range in between and inclusive of the endpoints. For example, in certain embodiments, the temperature is from about 42 °C to about 48 °C. For example, in certain embodiments, the temperature is from about 43 °C to about 47 °C. For example, in certain embodiments, the temperature is from about 44 °C to about 46 °C. For example, in certain embodiments, the temperature is about 45 °C. In certain embodiments, the tissue sample is contacted at a pressure/vacuum (P/V) of from -70 kPa(g) to 0 kPa(g). The tissue sample is contacted in this seventh step with agitation. In certain embodiments, the tissue sample is contacted in this seventh step with medium or high agitation as described in detail elsewhere herein. In certain embodiments, the tissue sample is contacted in this seventh step with high agitation. (vii)(b) After contact under the conditions and for an amount of time disclosed in (vii)(a), the xylene or xylene alternative is removed from the tissue sample. As discussed in detail elsewhere herein, removal does not mean that 100% of the xylene or xylene alternative is removed and some can remain on the sample. In certain embodiments, remaining xylene or xylene alternative is allowed to drip from the sample for a drip time of about 5, 10, 15, 20, 25, or 30 seconds before further processing. For example, in certain embodiments, remaining xylene or xylene alternative is allowed to drip from the sample for a drip time of about 10 seconds before further processing.
(viii) In certain embodiments, the next step of the method comprises (viii)(a) contacting the tissue sample again with xylene or a xylene alternative. One of ordinary skill in the art would recognize that xylene or alternative is commonly used in tissue processing at 100%. Thus, in certain embodiments, the xylene or alternative is at least about 95%, at least about 96%, at least about 97%, at least about 98%, or at least about 99%. In certain embodiments, the xylene or alternative is about 100%. In certain embodiments, recycled xylene can be use without effect. In certain embodiments, xylene substitutes or isopropanol may be substituted for xylene in this step. The tissue sample is contacted with the xylene or a xylene alternative for about 10, 15, 20, 25, 30, 35, 40, 45, or 50 minutes or any time or range in between, inclusive of the endpoints. In certain embodiments, the tissue sample is contacted for a time of about 10 minutes to about 30 minutes. In certain embodiments, the tissue sample is contacted for a time of about 15 minutes to about 25 minutes. In certain embodiments, the tissue sample is contacted for a time of about 17 minutes to about 23 minutes. In certain embodiments, the tissue sample is contacted for a time of about 18 minutes to about 22 minutes. In certain embodiments, the tissue sample is contacted for a time of about 20 minutes. The tissue sample is contacted at a temperature of about 40 °C, 41 °C, 42 °C, 43 °C, 44 °C, 45 °C, 46 °C, 47 °C, 48 °C, 49 °C, or 50 °C, or any range in between and inclusive of the endpoints. For example, in certain embodiments, the temperature is from about 42 °C to about 48 °C. For example, in certain embodiments, the temperature is from about 43 °C to about 47 °C. For example, in certain embodiments, the temperature is from about 44 °C to about 46 °C. For example, in certain embodiments, the temperature is about 45 °C. In certain embodiments, the tissue sample is contacted at a pressure/vacuum (P/V) of from -70 kPa(g) to 0 kPa(g). The tissue sample is contacted in this eight step with agitation. In certain embodiments, the tissue sample is contacted in this eighth step with medium or high agitation as described in detail elsewhere herein. The tissue sample is contacted in this eighth step with high agitation. (viii)(b) After contact under the conditions and for an amount of time disclosed in (viii)(a), the xylene or xylene alternative is removed from the tissue sample. As discussed in detail elsewhere herein, removal does not mean that 100% of the xylene or xylene alternative is removed and some can remain on the sample. In certain embodiments, remaining xylene or xylene alternative is allowed to drip from the sample for a drip time of about 5, 10, 15, 20, 25, or 30 seconds before further processing. For example, in certain embodiments, remaining xylene or xylene alternative is allowed to drip from the sample for a drip time of about 10 seconds before further processing.
(ix) In certain embodiments, the next step of the method comprises (ix)(a), contacting the tissue sample again with xylene or a xylene alternative. One of ordinary skill in the art would recognize that xylene or alternative is commonly used in tissue processing at 100%. Thus, in certain embodiments, the xylene or alternative is at least about 95%, at least about 96%, at least about 97%, at least about 98%, or at least about 99%. In certain embodiments, the xylene or alternative is about 100%. In certain embodiments, recycled xylene can be use without effect. In certain embodiments, xylene substitutes or isopropanol may be substituted for xylene in this step. The tissue sample is contacted with the xylene or a xylene alternative for about 25, 30, 35, 40, 45, 50, 55, 60, 65, or 70 minutes or any time or range in between, inclusive of the endpoints. In certain embodiments, the tissue sample is contacted for a time of about 25 minutes to about 55 minutes. In certain embodiments, the tissue sample is contacted for a time of about 25 minutes to about 50 minutes. In certain embodiments, the tissue sample is contacted for a time of about 35 minutes to about 50 minutes. In certain embodiments, the tissue sample is contacted for a time of about 37 minutes to about 43 minutes. In certain embodiments, the tissue sample is contacted for a time of about 38 minutes to about 42 minutes. In certain embodiments, the tissue sample is contacted for a time of about 40 minutes. The tissue sample is contacted at a temperature of about 40 °C, 41 °C, 42 °C, 43 °C, 44 °C, 45 °C, 46 °C, 47 °C, 48 °C, 49 °C, or 50 °C, or any range in between and inclusive of the endpoints. For example, in certain embodiments, the temperature is from about 42 °C to about 48 °C. For example, in certain embodiments, the temperature is from about 43 °C to about 47 °C. For example, in certain embodiments, the temperature is from about 44 °C to about 46 °C. For example, in certain embodiments, the temperature is about 45 °C. In certain embodiments, the tissue sample is contacted at a pressure/vacuum (P/V) of from -70 kPa(g) to 0 kPa(g). The tissue sample is contacted in this ninth step with agitation. In certain embodiments, the tissue sample is contacted in this ninth step with medium or high agitation as described in detail elsewhere herein. In certain embodiments, the tissue sample is contacted in this ninth step with medium agitation. (ix)(b) After contact under the conditions and for an amount of time disclosed in (ix)(a), the xylene or xylene alternative is removed from the tissue sample. As discussed in detail elsewhere herein, removal does not mean that 100% of the xylene or xylene alternative is removed and some can remain on the sample. In certain embodiments, remaining xylene or xylene alternative is allowed to drip from the sample for a drip time of about 5, 10, 15, 20, 25, or 30 seconds before further processing. For example, in certain embodiments, remaining xylene or xylene alternative is allowed to drip from the sample for a drip time of about 10 seconds before further processing.
(x) In certain embodiments, the next step of the method comprises (x)(a) contacting the tissue sample with paraffin. While the choice of paraffin is non-limiting, one of ordinary skill in the art would understand that there are paraffins with different compositions in regard to plastic volumes which can be used in the methods of this disclosure. The tissue sample is contacted with the paraffin for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 60 °C, 61 °C, 62 °C, 63 °C, 64 °C, 65 °C, 66 °C, 67 °C, 68 °C, 69 °C, or 70 °C, or any range in between and inclusive of the endpoints. For example, in certain embodiments, the temperature is from about 62 °C to about 68 °C. For example, in certain embodiments, the temperature is from about 63 °C to about 67 °C. For example, in certain embodiments, the temperature is from about 64 °C to about 66 °C. For example, in certain embodiments, the temperature is about 65 °C. In certain embodiments, the tissue sample is contacted in this step under a vacuum. In certain embodiments, the tissue sample is contacted at a pressure/vacuum (P/V) of from 0 kPa(g) to +45 kPa(g). The tissue sample is contacted in this tenth step with agitation. In certain embodiments, the tissue sample is contacted in this tenth step with medium or high agitation as described in detail elsewhere herein. In certain embodiments. the tissue sample is contacted in this tenth step with high agitation. (x)(b) After contact under the conditions and for an amount of time disclosed in (x)(a), the paraffin is removed from the tissue sample. As discussed in detail elsewhere herein, removal does not mean that 100% of the paraffin is removed and some can remain on the sample. In certain embodiments, remaining paraffin is allowed to drip from the sample for a drip time of about 5, 10, 15, 20, 25, or 30 seconds before further processing. For example, in certain embodiments, remaining paraffin is allowed to drip from the sample for a drip time of about 10 seconds before further processing.
(xi) In certain embodiments, the next step of the method comprises (xi)(a) contacting the tissue sample again with paraffin. While the choice of paraffin is non-limiting, one of ordinary skill in the art would understand that there are paraffins with different compositions in regard to plastic volumes which can be used in the methods of this disclosure. The tissue sample is contacted with the paraffin for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 60 °C, 61 °C, 62 °C, 63 °C, 64 °C, 65 °C, 66 °C, 67 °C, 68 °C, 69 °C, or 70 °C, or any range in between and inclusive of the endpoints. For example, in certain embodiments, the temperature is from about 62 °C to about 68 °C. For example, in certain embodiments, the temperature is from about 63 °C to about 67 °C. For example, in certain embodiments, the temperature is from about 64 °C to about 66 °C. For example, in certain embodiments, the temperature is about 65 °C. In certain embodiments, the tissue sample is contacted in this step under a vacuum. In certain embodiments, the tissue sample is contacted at a pressure/vacuum (P/V) of from 0 kPa(g) to +45 kPa(g). The tissue sample is contacted in this eleventh step with agitation. In certain embodiments, the tissue sample is contacted in this eleventh step with medium or high agitation as described in detail elsewhere herein. In certain embodiments, the tissue sample is contacted in this eleventh step with high agitation. (xi)(b) After contact under the conditions and for an amount of time disclosed in (xi)(a), the paraffin is removed from the tissue sample. As discussed in detail elsewhere herein, removal does not mean that 100% of the paraffin is removed and some can remain on the sample. In certain embodiments, remaining paraffin is allowed to drip from the sample for a drip time of about 5, 10, 15, 20, 25, or 30 seconds before further processing. For example, in certain embodiments, remaining paraffin is allowed to drip from the sample for a drip time of about 10 seconds before further processing.
(xii) In certain embodiments, the final step of the method comprises (xii)(a) contacting the tissue sample again with paraffin. While the choice of paraffin is non-limiting, one of ordinary skill in the art would understand that there are paraffins with different compositions in regard to plastic volumes which can be used in the methods of this disclosure. The tissue sample is contacted with the paraffin for about 15, 20, 25, 30, 35, 40, 45, 50, 55, or 60 minutes or any time or range in between, inclusive of the endpoints. In certain embodiments, the tissue sample is contacted for a time of about 15 minutes to about 40 minutes. In certain embodiments, the tissue sample is contacted for a time of about 20 minutes to about 30 minutes. In certain embodiments, the tissue sample is contacted for a time of about 22 minutes to about 28 minutes. In certain embodiments, the tissue sample is contacted for a time of about 23 minutes to about 27 minutes. In certain embodiments, the tissue sample is contacted for a time of about 25 minutes. The tissue sample is contacted at a temperature of about 60 °C, 61 °C, 62 °C, 63 °C, 64 °C, 65 °C, 66 °C, 67 °C, 68 °C, 69 °C, or 70 °C, or any range in between and inclusive of the endpoints. For example, in certain embodiments, the temperature is from about 62 °C to about 68 °C. For example, in certain embodiments, the temperature is from about 63 °C to about 67 °C. For example, in certain embodiments, the temperature is from about 64 °C to about 66 °C. For example, in certain embodiments, the temperature is about 65 °C. In certain embodiments, the tissue sample is contacted in this step under a vacuum. In certain embodiments, the tissue sample is contacted at a pressure/vacuum (P/V) of from 0 kPa(g) to +45 kPa(g). The tissue sample is contacted in this twelfth step with agitation. In certain embodiments, the tissue sample is contacted in this twelfth step with medium or high agitation as described elsewhere herein. In certain embodiments, the tissue sample is contacted in this twelfth step with high agitation. (xii)(b) After contact under the conditions and for an amount of time disclosed in (xii)(a), the paraffin is removed from the tissue sample. As discussed in detail elsewhere herein, removal does not mean that 100% of the paraffin is removed and some can remain on the sample. In certain embodiments, remaining paraffin is allowed to drip from the sample for a drip time of about 5, 10, 15, 20, 25, or 30 seconds before further processing. For example, in certain embodiments, remaining paraffin is allowed to drip from the sample for a drip time of about 10 seconds before further processing.

Following the final step, the tissue sample can be further processed such as by embedding the tissue and/or used in staining protocols.

### EXAMPLES

A 5-hour tissue processing protocol has been developed for processing tissue types, including breast, uterine, and gastrointestinal samples. In this example, the samples have a dimension of 20 x 20 x 4 mm. This protocol reduces total processing time when compared to other PELROIS 8-hour and 12-hour xylene factory protocols (e.g., HistoCore PELORIS 3 Premium Tissue Processing System User Manual, Melbourne), while also maintaining high quality tissue processing. In this example, testing was conducted using IP ActivFlo I cassettes on the HistoCore PELORIS 3 Tissue Processor to verify if the 5-hour xylene processing protocol could be installed and offered as a factory protocol in the future. Results of the testing conducted met the required acceptance criteria. The results of testing show that the quality of tissue processing derived from a 5-hour xylene protocol executed using a HistoCore PELORIS 3 Tissue Processor in combination with IP ActivFlo 1 cassettes met the acceptance criteria required of a factory protocol.

### Example 1. Testing for 5-Hour Processing Protocol Verification.

*Acceptance Criteria Tested:* HistoCore PELORIS 3 Tissue Processor passed a Verification of Installation Tissue Processing Run. Test set must achieve a minimum pass rate of 95% as specified in the PELORIS Tissue Processing Verification Test Plan, Melbourne.

*Scoring System:* Each sample was graded based on an assessment of 26 different parameters including both macroscopic and microscopic appearance (PELORIS Slide Evaluation Sheet, Melbourne). This allowed a detailed assessment to be made of the overall quality of tissue processing. The acceptance criteria were based on statistically relevant criteria. When analyzing results, any tissue sample that received a score above 80% in categories one (1) through six (6) in **Table 1** was of high quality, and tissue samples below 50% were a failure.

**Table 1**

| **Block and Slide Grading Breakdown** | | |
|---|---|---|
| **Subcategories** | **Averages** | |
| **Macro Assessment** | | |
| 1. Cutting | Section Prep and Block Storage | |
| 2. Mounting | | |
| 3. Block Stability | | |
| **Micro Assessment** | | Total Score |
| 4. Physical Quality | Microscopic assessment | |
| 5. Morphology | | |
| 6. Staining | | |

### Materials:

**Table 2. Equipment**

| **Equipment Name** | **Serial Number** |
|---|---|
| HistoCore PELORIS 3 Tissue Processor | 45110212 |
| HistoCore Arcadia Embedding Center | 63 |
| Leica RM 2255 | 10464 |
| Leica HistoCore SPECTRA ST | 00000070 |

**Table 3. Consumables**

| **Consumable Name** | **Serial Number** |
|---|---|
| Surgipath 10% Neutral Buffered Formalin | 3800598 |
| Surgipath 70% Reagent Alcohol | 38031377 |
| Surgipath 100% Reagent Alcohol | 3803686 |
| Surgipath Xylene | 3803665 |
| Surgipath Paraplast | 39601006 |
| Snowcoat Clipped Corner slides | 3800381/86 |
| HistoCore SPECTRA S2-800 Staining System | 3801657 |
| Micromount Mounting Media | 3801730 |
| IP ActivFlo Routine I Cassettes | 39LC-500-1/11 |
| Leica Coverglass | 3800145 |

*Sample size:* Based on a pass rate of 95% and a minimal acceptable value of 90% for the population, the sample size required for 80% power to achieve lower confidence level greater than the minimal acceptable value was 231 samples.

A sample size of 240 was used for this verification testing. No control samples were run. Testing was performed as per PELORIS Tissue Processing Verification Test Plan. Testing was conducted using a 110 V HistoCore PELORIS 3 Tissue Processor configured for xylene processing and three basket fill level.

*Test Execution:* Each of the IP ActivFlo Routine I cassettes was printed with a unique identifier detailing the tissue name and test sample number following the layout shown in **Table 4.**

**Table 4. Test Tissue Designation for 5 Hour Breast Protocol**

| **Block Numbers** | | | **Run No** | **Retort** | **Tissue Size** |
|---|---|---|---|---|---|
| **Breast** | **GI** | **Uterus** | | | |
| T1 to T20 | T21 to T40 | T41 to T60 | 1 | A | 10 x 10 x 4.0mm |
| T61 to T80 | T81 to T100 | T101 to T120 | 2 | B | 10 x 10 x 4.0mm |
| T121 to T140 | T141 to T160 | T161 to T180 | 3 | A | 10 x 10 x 4.0mm |
| T181 to T200 | T201 to T220 | T221 to T240 | 4 | B | 10 x 10 x 4.0mm |

The tissue samples were grossed and placed into cassettes and then into baskets as outlined in **Table 5** and **Table 6,** with empty IP ActivFlo Routine I cassettes placed between each of the test cassettes to represent a full basket.

**Table 5. Test Cassette Placement in Tissue Processing Baskets**

| **Run** | **Tissue type** | **Basket position** |
|---|---|---|
| 1 | Breast | Front |
| | GI | Middle |
| | Uterus | Back |
| 2 | Uterus | Front |
| | Breast | Middle |
| | GI | Back |
| 3 | GI | Front |
| | Uterus | Middle |
| | Breast | Back |
| 4 | Breast | Front |
| | GI | Middle |
| | Uterus | Back |

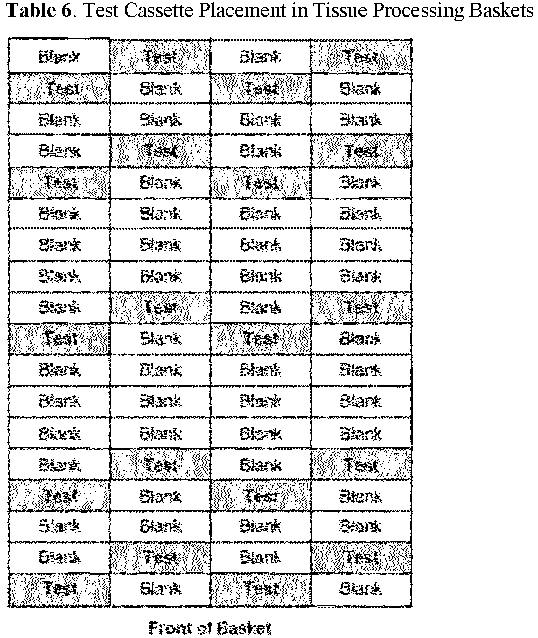

Each of the baskets were then loaded into the HistoCore PELORIS 3 Tissue Processor, which was filled with fresh reagents and prepped for testing as outlined in the HistoCore PELORIS 3 Premium Tissue Processing System User Manual, Melbourne. Verification of installation runs was completed and documented.

Four (4) test processing runs were conducted using the 5-hour xylene processing protocol, outlined in Attachment **Table 7,** with a Quick Clean Protocol executed between each test processing run.

**Table 7. 5 Hour Breast Protocol**

| **Reagent** | **Time (mins)** | **Temp** | **P/V** | **Stirrer** | **Drip** |
|---|---|---|---|---|---|
| 10% NBF | 1 | Amb | Amb | Med | 10 |
| Ethanol | 30 | Amb | Amb | Med | 10 |
| Ethanol | 25 | Amb | Amb | High | 10 |
| Ethanol | 25 | Amb | Amb | Med | 10 |
| Ethanol | 25 | Amb | Amb | High | 10 |
| Ethanol | 25 | Amb | Amb | Med | 10 |
| Xylene | 20 | 45 | Amb | High | 10 |
| Xylene | 20 | 45 | Amb | High | 10 |
| Xylene | 40 | 45 | Amb | Med | 10 |
| Paraffin | 25 | 65 | Vacuum | High | 10 |
| Paraffin | 25 | 65 | Vacuum | High | 10 |
| Paraffin | 25 | 65 | Vacuum | High | 10 |

The processing runs were performed using Retort A and Retort B alternatively to account for retort-to-retort variability, as outlined in **Table 4.**

After each processing run was completed, tissue samples were embedded. Blocks were trimmed free of excess paraffin and then faced until the tissue was accessible. After facing, each block was placed onto ice to be chilled and re-hydrated before being sectioned. Each block was sectioned by laying out a ribbon of at least 3-5 sections. Sections were mounted onto a pre-labeled slide and left to air dry overnight.

Prior to staining, all reagents on the HistoCore SPECTRA Stainer (LEICA BIOSYSTEMS, Richmond, IL) were changed and documented according to **Table 8** and **Table 9.** Slides were stained using a Moderate Protocol and then coverslipped. These slides were then examined microscopically and scored.

**Table 8. H&E Moderate Staining Protocol**

| **Table 1** | **Protocol Name: H&E Staining System S1/ H&E Staining System S2** | | **Abbreviation: HE1/HE2** | | **Agitation Speed: 4** | | **Oven Temperature: 70°C** | |
|---|---|---|---|---|---|---|---|---|
| **Step** | **Reagent** | **Abbreviation** | **Time [mm:ss]** | **Tolerance** | **Process Class** | **Heated Vessel** | **Days Max** | **Slide Max** |
| **Default:** | Oven | Oven | 15.00 | 50% | NA | NA | NA | NA |
| 1 | Xylene Dewax 1 | Xyl Dwx 1 | 2:00 | 100% | Dewaxing | No | 5 | 800 |
| 2 | Xylene Dewax 2 | Xyl Dwx 2 | 2:00 | 100% | Dewaxing | No | 5 | 800 |
| 3 | 100% Alcohol Dewax 1 | 100Dwx 1 | 2:00 | 100% | Dewaxing | No | 5 | 800 |
| 4 | 100% Alcohol Dewax 2 | 1 00Dwx 2 | 2:00 | 100% | Dewaxing | No | 5 | 800 |
| 5 | 95% Alcohol Dewax 1 | 95Dwx 1 | 2:00 | 100% | Dewaxing | No | 5 | 800 |
| 6 | Tap Water | Tap Water | 2:00 | 100% | NA | No | NA | NA |
| 7 | SPECTRA Homalast S1/ SPECTRA Homalast S1 | L HLst S1/ L Hlst S2 | 2:00 | 100% | Neutralizing | No | 7 | 1600 |
| 8 | SPECTRA Hematoxylin S1/ SPECTRA Hematoxylin S1 | L Hmtx S1/ L Hmtx S2 | Refer to Hematoxylin Dial Settings | 0% | Staining | No | 7 | 1600 |
| 9 | Tap Water | Tap Water | 2:00 | 100% | NA | No | NA | NA |
| 10 | SPECTRA Differontlator S1/ SPECTRA Differontlator S2 | L Diff S1/ L Diff S2 | S1: 1:30 | 0% | Differentiating | No | 7 | 1600 |
| | | | S2: 1:00 | | | | | |
| 11 | Tap Water | Tap Water | 2:00 | 100% | NA | No | NA | NA |
| 12 | SPECTRA Bluing Agent S1/ SPECTRA Bluing Agent S1 | L Blue S1/ L Blue S2 | 2:00 | 100% | Staining | No | 7 | 1600 |
| 13 | Tap Water | Tap Water | 2:00 | 100% | NA | No | NA | NA |
| 14 | 95% Alcohol Neutralizing H | 95Neutr H | 2:00 | 100% | Neutralizing | No | 5 | 800 |
| 15 | SPECTRA Eosin S1/ SPECTRA Eosin S2 | L Eos S1/ L Eos S2 | Refer to Eosin Dial Settings | 0% | Staining | No | 7 | 1600 |
| 16* | 95% Alcohol Dehyd 1 | 95Dhy 1 | 2:00 | 0% | Dehydrating | No | 5 | 400 |
| 17 | 100% Alcohol Dhyd 1H | 100Dhy 1H | 2:00 | 0% | Dehydrating | No | 5 | 800 |
| 18 | 100% Alcohol Dhyd 2H | 1 00Dhy 2H | 2:00 | 0% | Dehydrating | No | 5 | 800 |
| 19 | Xylene Dehyd 1 | XylDhy 1 | 2:00 | 100% | Dehydrating | No | 5 | 800 |
| 20 | Xylene Dehyd 2 | XylDhy 2 | 2:00 | 100% | Dehydrating | No | 5 | 800 |
| 21 | Exit | NA | NA | NA | NA | NA | NA | NA |

**Table 9. ST5010 Staining Protocol**

| **Settings: Dips = 2, Withdrawal Speed = 9** | | | | | |
|---|---|---|---|---|---|
| **Step** | **Station** | **Reagent** | | **Time** | **Exact** |
| 1 | Load | N/A | | 0:00 | N/A |
| 2 | 1 | Xylene | | 2:00 | No |
| 3 | 2 | Xylene | | 2:00 | No |
| 4 | 3 | Xylene | | 2:00 | No |
| 5 | 4 | 100% Reagent Alcohol | | 1:00 | No |
| 6 | 5 | 100% Reagent Alcohol | | 1:00 | No |
| 7 | 6 | 100% Reagent Alcohol | | 1:00 | No |
| 8 | 7 | 80% Reagent Alcohol | | 1:00 | No |
| 9 | Water Rinse 1 | Water Rinse | | 1:00 | No |
| 10 | Water Rinse 2* | ST HemaLast | | 0:30 | Yes |
| 11 | 8 | ST Hematoxylin | Protocol 1 | 2:00 | Yes |
| | | | Protocol 2 | 3:00 | Yes |
| | | | Protocol 3 | 5:00 | Yes |
| 12 | Water Rinse 5 | Water Rinse | | 2:00 | Yes |
| 13 | 9 | ST Differentiator | | 0:45 | Yes |
| 14 | Water Rinse 4 | Water Rinse | | 1:00 | No |
| 15 | 10 | ST Bluing Agent | | 1:00 | Yes |
| 16 | Water Rinse 3 | Water Rinse | | 1:00 | No |
| 17 | 11 | 80% Reagent Alcohol | | 1:00 | No |
| 18 | 12 | ST Eosin | Protocol 1 | 0:30 | Yes |
| | | | Protocol 2 | 0:50 | Yes |
| | | | Protocol 3 | 1:00 | Yes |
| 19 | 13 | 100% Reagent Alcohol | | 1:00 | Yes |
| 20 | 14 | 100% Reagent Alcohol | | 1:00 | Yes |
| 21 | 15 | 100% Reagent Alcohol | | 1:00 | Yes |
| 22 | 16 | Xylene | | 1:00 | No |
| 23 | 17 | Xylene | | 1:00 | No |
| 24 | 18 | Xylene | | 1:00 | No |

| | | | | | |
|---|---|---|---|---|---|
| * Indicates a manually duplicated step. | | | | | |

*Test Case Results:* Following procedural steps followed in the HistoCore PELORIS 3 Premium Tissue Processing System User Manual, Melboume, the Verification of installation runs passed, and the testing was able to proceed.

Slide scoring results followed the acceptance criteria outlined in the PELORIS Tissue Processing Verification Test Plan, Melbourne, and found 13 different slide and block combinations with subsections that scored less than 50%, which are individually considered failures. By calculating the number of failures against the sample size of 240 samples, the resulting pass rate was determined to be 95%, satisfying the acceptance criteria of the 95%.

*Individual Tissue Type Scoring:* Review of the data for the breast blocks individually, showed that 11 of the 13 highlighted blocks failed in the "Cutting" subcategory. In subsequent grading of the quality of the section, microscopic preservation and total score, blocks had a score above the 50% pass rate, demonstrating overall acceptability (PELORIS Tissue Processing Verification Test Plan, Melbourne).

Two blocks (B181 and B126) had scores of 0% for every category. These specific blocks were not able to be sectioned under the constraints of the written protocol, such as only allowing for chilling via an ice block and for a maximum of 15 minutes. As a result of not being able to obtain a full section, subsequent microscopic evaluation was not possible, which is documented in the subcategories having a score of 0%.

*Tissue Type Averages:* The averages for individual categories graded for each of the three (3) tissue types is summarized in **Table 10, Table 11,** and **Table 12.**

**Table 10.**

| Breast Block Number | AVG |
|---|---|
| | |
| Cutting | 75.0% |
| Mounting | 82.5% |
| Block stability on storage | 92.5% |
| Physical quality of section | 79.0% |
| Quality of tissue preservation | 89.1% |
| Quality of staining (chemical) | 90.9% |
| | |
| Section prep & block storage | 83.2% |
| Microscopic assessment | 86.4% |
| | |
| Total Score | 84.9% |

**Table 11.**

| GI Block Number | AVG |
|---|---|
| | |
| Cutting | 94.1% |
| Mounting | 82.3% |
| Block stability on storage | 99.7% |
| Physical quality of section | 80.3% |
| Quality of tissue preservation | 93.6% |
| Quality of staining (chemical) | 90.6% |
| | |
| Section prep & block storage | 91.9% |
| Microscopic assessment | 88.2% |
| | |
| Total Score | 90.1% |

**Table 12.**

| Uterine Block Number | AVG |
|---|---|
| | |
| Cutting | 93.6% |
| Mounting | 88.1% |
| Block stability on storage | 97.8% |
| Physical quality of section | 76.5% |
| Quality of tissue preservation | 94.4% |
| Quality of staining (chemical) | 92.3% |
| | |
| Section prep & block storage | 93.2% |
| Microscopic assessment | 87.7% |
| | |
| Total Score | 90.5% |

The slide scoring criteria document (PELORIS Tissue Processing Verification Test Plan, Melbourne) details that a score greater than 80% indicates that the quality of tissue processing is high, and a score of less than 50% is a failure. Comparing the averages between each of the three (3) tissue types, the total score is greater than 80% for each tissue type. Accordingly, the blocks and slides passed, and the quality of tissue processing assessed as high. Within each of the individual categories, none of the tissue types received a score of less than 50%, further demonstrating acceptability.

*Slide Staining Procedure:* When compiling data for analysis, it was discovered that 16 blocks were missed in the original testing. Those blocks were sectioned onto slides and placed into an oven for one hour at 60 °C for drying instead of being left to dry overnight. This deviation is acceptable because the baking method is not expected to impact the tissue processing quality. The slides were then stained and scored.

*Processing Basket Layout:* During the original testing that followed **Table 5** and **Table 6,** three (s) baskets were loaded into each retort on two (2) for a total of four (4) tissue processing runs. It was discovered after processing that the basket number setting for reagent fill level on the HistoCore PELORIS 3 Tissue Processor was set to two (2) baskets instead of the three (3) that was required for testing. As a result, the 80 cassettes in the top basket in retorts A and B for each of the four (4) tissue processing runs were not exposed to an adequate volume of reagent and as a result had to be discarded. To account for the cassettes that had to be discarded, 80 cassettes were processed following the testing protocol as detailed above. To keep conditions consistent with original testing, empty IP ActivFlo I cassettes were placed in between test samples as well as the lower two processing baskets to mimic the original 160 sample size of cassettes. Following processing, the tissue in these 80 cassettes followed the same steps outlined in the protocol as the original 160 cassettes. This deviation is acceptable due to maintaining the same testing conditions and samples as per the test plan which did not impact the assessment of the 5-Hour tissue processing protocol.

*Conclusion:* The Examples demonstrate that the quality of processing of breast, uterine, and gastrointestinal samples using a 5-hour xylene protocol are satisfactory and with the same quality to replace prior, more time consuming protocols such as well-known 8 or 12 hours protocol.

The breadth and scope of the present invention should not be limited by any of the above-described exemplary embodiments, but should be defined only in accordance with the following claims.

## Claims

1. A method of processing a tissue sample for use in histology, the method comprising the steps of:
(i)(a) contacting the tissue sample with neutral-buffered formalin (NBF) at a temperature of from about 18 °C to about 27 °C, with agitation, and (i)(b) removing the NBF from the tissue sample;
(ii)(a) contacting the tissue sample with ethanol for about 15 minutes to about 45 minutes, at a temperature of from about 18 °C to about 27 °C, with agitation, and (ii)(b) after about 15 minutes to about 45 minutes, removing the ethanol from the tissue sample,
wherein the ethanol is between about 65% and 75% ethanol, between about 66% and 74% ethanol, between about 67% and 73% ethanol, between about 68% and 72% ethanol; or between about 69% and 71% ethanol;
(iii)(a) contacting the tissue sample with ethanol for about 15 minutes to about 45 minutes, at a temperature of from about 18 °C to about 27 °C, with agitation, and (iii)(b) after about 15 minutes to about 45 minutes, removing the ethanol from the tissue sample,
wherein the ethanol is between about 85% and 95% ethanol, between about 86% and 94% ethanol, between about 87% and 93% ethanol, between about 88% and 92% ethanol; or between about 89% and 91% ethanol;
(iv)(a) contacting the tissue sample with ethanol for about 15 minutes to about 45 minutes, at a temperature of from about 18 °C to about 27 °C, with agitation, and (iv)(b) after about 15 minutes to about 45 minutes, removing the ethanol from the tissue sample,
wherein the ethanol is at least about 95% ethanol, at least about 96% ethanol, at least about 97% ethanol, at least about 98% ethanol, or at least about 99% ethanol;
(v)(a) contacting the tissue sample with ethanol for about 15 minutes to about 45 minutes, at a temperature of from about 18 °C to about 27 °C, with agitation, and (v)(b) after about 15 minutes to about 45 minutes, removing the ethanol from the tissue sample,
wherein the ethanol is at least about 95% ethanol, at least about 96% ethanol, at least about 97% ethanol, at least about 98% ethanol, or at least about 99% ethanol;
(vi)(a) contacting the tissue sample with ethanol for about 15 minutes to about 45 minutes, at a temperature of from about 18 °C to about 27 °C, with agitation, and (vi)(b) after about 15 minutes to about 45 minutes, removing the ethanol from the tissue sample,
wherein the ethanol is at least about 95% ethanol, at least about 96% ethanol, at least about 97% ethanol, at least about 98% ethanol, or at least about 99% ethanol;
(vii)(a) contacting the tissue sample with xylene for about 10 minutes to about 40 minutes, at a temperature of from about 43 °C to about 47 °C, with agitation, and (vii)(b) after about 10 minutes to about 40 minutes, removing the xylene from the tissue sample,
wherein the xylene is at least about 95% xylene, at least about 96% xylene, at least about 97% xylene, at least about 98% xylene, or at least about 99% xylene;
(viii)(a) contacting the tissue sample with xylene for about 10 minutes to about 40 minutes, at a temperature of from about 43 °C to about 47 °C, with agitation, and (viii)(b) after about 10 minutes to about 40 minutes, removing the xylene from the tissue sample,
wherein the xylene is at least about 95% xylene, at least about 96% xylene, at least about 97% xylene, at least about 98% xylene, or at least about 99% xylene;
(ix)(a) contacting the tissue sample with xylene for about 20 minutes to about 50 minutes, at a temperature of from about 43 °C to about 47 °C, with agitation, and (ix)(b) after about 20 minutes to about 50 minutes, removing the xylene from the tissue sample,
wherein the xylene is at least about 95% xylene, at least about 96% xylene, at least about 97% xylene, at least about 98% xylene, or at least about 99% xylene;
(x)(a) contacting the tissue sample with paraffin for about 15 minutes to about 45 minutes, at a temperature of from about 60 °C to about 70 °C, under a vacuum, with agitation, and (x)(b) after about 15 minutes to about 45 minutes, removing the paraffin from the tissue sample;
(xi)(a) contacting the tissue sample with paraffin for about 15 minutes to about 45 minutes, at a temperature of from about 60 °C to about 70 °C, under a vacuum, with agitation, and (xi)(b) after about 15 minutes to about 45 minutes, removing the paraffin from the tissue sample; and
(xii)(a) contacting the tissue sample with paraffin for about 15 minutes to about 45 minutes, at a temperature of from about 60 °C to about 70 °C, under a vacuum, with agitation, and (xii)(b) after about 15 minutes to about 45 minutes, removing the paraffin from the tissue sample.

2. The method of claim 1, the method comprising:
(ii)(a) contacting the tissue sample with ethanol for about 25 minutes to about 35 minutes, and (ii)(b) after about 25 minutes to about 35 minutes, removing the ethanol from the tissue sample;
(iii)(a) contacting the tissue sample with ethanol for about 20 minutes to about 30 minutes, and (iii)(b) after about 20 minutes to about 30 minutes, removing the ethanol from the tissue sample;
(iv)(a) contacting the tissue sample with ethanol for about 20 minutes to about 30 minutes, and (iv)(b) after about 20 minutes to about 30 minutes, removing the ethanol from the tissue sample;
(v)(a) contacting the tissue sample with ethanol for about 20 minutes to about 30 minutes, and (v)(b) after about 20 minutes to about 30 minutes, removing the ethanol from the tissue sample;
(vi)(a) contacting the tissue sample with ethanol for about 20 minutes to about 30 minutes, and (vi)(b) after about 20 minutes to about 30 minutes, removing the ethanol from the tissue sample;
(vii)(a) contacting the tissue sample with xylene for about 15 minutes to about 25 minutes, and (vii)(b) after about 15 minutes to about 25 minutes, removing the xylene from the tissue sample;
(viii)(a) contacting the tissue sample with xylene for about 15 minutes to about 25 minutes, and (viii)(b) after about 15 minutes to about 25 minutes, removing the xylene from the tissue sample;
(ix)(a) contacting the tissue sample with xylene for about 35 minutes to about 50 minutes, and (ix)(b) after about 35 minutes to about 50 minutes, removing the xylene from the tissue sample;
(x)(a) contacting the tissue sample with paraffin for about 20 minutes to about 30 minutes, and (x)(b) after about 20 minutes to about 30 minutes, removing the paraffin from the tissue sample;
(xi)(a) contacting the tissue sample with paraffin for about 20 minutes to about 30 minutes, and (xi)(b) after about 20 minutes to about 30 minutes, removing the paraffin from the tissue sample; and
(xii)(a) contacting the tissue sample with paraffin for about 20 minutes to about 30 minutes, and (xii)(b) after about 20 minutes to about 30 minutes, removing the paraffin from the tissue sample.

3. The method of claim 1 or 2,
wherein the process eliminates at least about 25%, 33%, 40%, 50%, 60%, 70%, 80%, 90%, 95%, 98%, 99%, or 100% of the heat applied during any individual step; and/or
wherein the process eliminates at least about 25%, 33%, 40%, 50%, 60%, or 70% of the heat applied cumulatively during the process.

4. The method of claim 1 or 2,
wherein the tissue sample has a dimension of at least about 20 x 10 x 3 mm;
wherein the tissue sample has a dimension of not greater than about 33 x 26 x 5 mm; and/or
wherein the tissue sample has a dimension of from about 20 x 10 x 3 mm to about 33 x 26 x 5 mm; particularly
wherein the tissue sample has a dimension of about 25 x 20 x 3 mm, or
wherein the tissue sample has a dimension of about 20 x 20 x 4 mm.

5. The method of 1, 2, or 4, wherein the ethanol in (ii) is about 70% ethanol, the ethanol in (iii) is about 90% ethanol, the ethanol in (iv) is about 100% ethanol, the ethanol in (v) is about 100% ethanol, and the ethanol in (vi) is about 100% ethanol.

6. The method of claim 1, 2, 4, or 5,
wherein the process eliminates at least about 25%, 33%, 40%, 50%, 60%, 70%, 80%, 90%, 95%, 98%, 99%, or 100% of the heat applied during any individual step, and/or
wherein the process eliminates at least about 25%, 33%, 40%, 50%, 60%, or 70% of the heat applied cumulatively during the process.

7. The method of any one of claims 1 to 3 or 4 to 6, wherein the tissue sample is selected from the group consisting of breast, colon, uterine, kidney, pancreas, liver, lung, skin, fat, muscle, connective tissue, bone, prostate, testicle, ovary, adrenal, thyroid, parotid, salivary gland, lymph node, and gastrointestinal samples.

8. The method of any one of claims 1 to 3 or 4-7, wherein the protocol has a total processing time of less than about 6 hours, less than about 5.5 hours, or less than about 5 hours, and less than about 6.5 hours, less than about 6 hours, or less than about 5.5 hours when fill and drain times are included.

## Patentansprüche

1. Verfahren zur Verarbeitung einer Gewebeprobe zur Verwendung in der Histologie, wobei das Verfahren die folgenden Schritte umfasst:
(i)(a) Inkontaktbringen der Gewebeprobe mit neutral gepuffertem Formalin (NBF) bei einer Temperatur von etwa 18 °C bis etwa 27 °C, mit Agitation, und (i)(b) Entfernen des **NBF** aus der Gewebeprobe;
(ii)(a) Inkontaktbringen der Gewebeprobe mit Ethanol für etwa 15 Minuten bis etwa 45 Minuten, bei einer Temperatur von etwa 18 °C bis etwa 27 °C, mit Agitation, und (ii)(b) nach etwa 15 Minuten bis etwa 45 Minuten, Entfernen des Ethanols aus der Gewebeprobe,
wobei das Ethanol zwischen etwa 65 % und 75 % Ethanol, zwischen etwa 66 % und 74 % Ethanol, zwischen etwa 67 % und 73 % Ethanol, zwischen etwa 68 % und 72 % Ethanol; oder zwischen etwa 69 % und 71 % Ethanol ist;
(iii)(a) Inkontaktbringen der Gewebeprobe mit Ethanol für etwa 15 Minuten bis etwa 45 Minuten, bei einer Temperatur von etwa 18 °C bis etwa 27 °C, mit Agitation, und (iii)(b) nach etwa 15 Minuten bis etwa 45 Minuten, Entfernen des Ethanols aus der Gewebeprobe,
wobei das Ethanol zwischen etwa 85 % und 95 % Ethanol, zwischen etwa 86 % und 94 % Ethanol, zwischen etwa 87 % und 93 % Ethanol, zwischen etwa 88 % und 92 % Ethanol; oder zwischen etwa 89 % und 91 % Ethanol ist;
(iv)(a) Inkontaktbringen der Gewebeprobe mit Ethanol für etwa 15 Minuten bis etwa 45 Minuten, bei einer Temperatur von etwa 18 °C bis etwa 27 °C, mit Agitation, und (iv)(b) nach etwa 15 Minuten bis etwa 45 Minuten, Entfernen des Ethanols aus der Gewebeprobe,
wobei das Ethanol mindestens etwa 95 % Ethanol, mindestens etwa 96 % Ethanol, mindestens etwa 97 % Ethanol, mindestens etwa 98 % Ethanol, oder mindestens etwa 99 % Ethanol ist;
(v)(a) Inkontaktbringen der Gewebeprobe mit Ethanol für etwa 15 Minuten bis etwa 45 Minuten, bei einer Temperatur von etwa 18 °C bis etwa 27 °C, mit Agitation, und (v)(b) nach etwa 15 Minuten bis etwa 45 Minuten, Entfernen des Ethanols aus der Gewebeprobe,
wobei das Ethanol mindestens etwa 95 % Ethanol, mindestens etwa 96 % Ethanol, mindestens etwa 97 % Ethanol, mindestens etwa 98 % Ethanol, oder mindestens etwa 99 % Ethanol ist;
(vi)(a) Inkontaktbringen der Gewebeprobe mit Ethanol für etwa 15 Minuten bis etwa 45 Minuten, bei einer Temperatur von etwa 18 °C bis etwa 27 °C, mit Agitation, und (vi)(b) nach etwa 15 Minuten bis etwa 45 Minuten, Entfernen des Ethanols aus der Gewebeprobe,
wobei das Ethanol mindestens etwa 95 % Ethanol, mindestens etwa 96 % Ethanol, mindestens etwa 97 % Ethanol, mindestens etwa 98 % Ethanol, oder mindestens etwa 99 % Ethanol ist;
(vii)(a) Inkontaktbringen der Gewebeprobe mit Xylol für etwa 10 Minuten bis etwa 40 Minuten, bei einer Temperatur von etwa 43 °C bis etwa 47 °C, mit Agitation, und (vii)(b) nach etwa 10 Minuten bis etwa 40 Minuten, Entfernen des Xylols aus der Gewebeprobe,
wobei das Xylol mindestens etwa 95 % Xylol, mindestens etwa 96 % Xylol, mindestens etwa 97 % Xylol, mindestens etwa 98 % Xylol, oder mindestens etwa 99 % Xylol ist;
(viii)(a) Inkontaktbringen der Gewebeprobe mit Xylol für etwa 10 Minuten bis etwa 40 Minuten, bei einer Temperatur von etwa 43 °C bis etwa 47 °C, mit Agitation, und (viii)(b) nach etwa 10 Minuten bis etwa 40 Minuten, Entfernen des Xylols aus der Gewebeprobe,
wobei das Xylol mindestens etwa 95 % Xylol, mindestens etwa 96 % Xylol, mindestens etwa 97 % Xylol, mindestens etwa 98 % Xylol, oder mindestens etwa 99 % Xylol ist;
(ix)(a) Inkontaktbringen der Gewebeprobe mit Xylol für etwa 20 Minuten bis etwa 50 Minuten, bei einer Temperatur von etwa 43 °C bis etwa 47 °C, mit Agitation, und (ix)(b) nach etwa 20 Minuten bis etwa 50 Minuten, Entfernen des Xylols aus der Gewebeprobe,
wobei das Xylol mindestens etwa 95 % Xylol, mindestens etwa 96 % Xylol, mindestens etwa 97 % Xylol, mindestens etwa 98 % Xylol, oder mindestens etwa 99 % Xylol ist;
(x)(a) Inkontaktbringen der Gewebeprobe mit Paraffin für etwa 15 Minuten bis etwa 45 Minuten, bei einer Temperatur von etwa 60 °C bis etwa 70 °C, unter Vakuum, mit Agitation, und (x)(b) nach etwa 15 Minuten bis etwa 45 Minuten, Entfernen des Paraffins aus der Gewebeprobe;
(xi)(a) Inkontaktbringen der Gewebeprobe mit Paraffin für etwa 15 Minuten bis etwa 45 Minuten, bei einer Temperatur von etwa 60 °C bis etwa 70 °C, unter Vakuum, mit Agitation, und (xi)(b) nach etwa 15 Minuten bis etwa 45 Minuten, Entfernen des Paraffins aus der Gewebeprobe; und
(xii)(a) Inkontaktbringen der Gewebeprobe mit Paraffin für etwa 15 Minuten bis etwa 45 Minuten, bei einer Temperatur von etwa 60 °C bis etwa 70 °C, unter Vakuum, mit Agitation, und (xii)(b) nach etwa 15 Minuten bis etwa 45 Minuten, Entfernen des Paraffins aus der Gewebeprobe.

2. Verfahren nach Anspruch 1, wobei das Verfahren Folgendes umfasst:
(ii)(a) Inkontaktbringen der Gewebeprobe mit Ethanol für etwa 25 Minuten bis etwa 35 Minuten, und (ii)(b) nach etwa 25 Minuten bis etwa 35 Minuten, Entfernen des Ethanols aus der Gewebeprobe;
(iii)(a) Inkontaktbringen der Gewebeprobe mit Ethanol für etwa 20 Minuten bis etwa 30 Minuten, und (iii)(b) nach etwa 20 Minuten bis etwa 30 Minuten, Entfernen des Ethanols aus der Gewebeprobe;
(iv)(a) Inkontaktbringen der Gewebeprobe mit Ethanol für etwa 20 Minuten bis etwa 30 Minuten, und (iv)(b) nach etwa 20 Minuten bis etwa 30 Minuten, Entfernen des Ethanols aus der Gewebeprobe;
(v)(a) Inkontaktbringen der Gewebeprobe mit Ethanol für etwa 20 Minuten bis etwa 30 Minuten, und (v)(b) nach etwa 20 Minuten bis etwa 30 Minuten, Entfernen des Ethanols aus der Gewebeprobe;
(vi)(a) Inkontaktbringen der Gewebeprobe mit Ethanol für etwa 20 Minuten bis etwa 30 Minuten, und (vi)(b) nach etwa 20 Minuten bis etwa 30 Minuten, Entfernen des Ethanols aus der Gewebeprobe;
(vii)(a) Inkontaktbringen der Gewebeprobe mit Xylol für etwa 15 Minuten bis etwa 25 Minuten, und (vii)(b) nach etwa 15 Minuten bis etwa 25 Minuten, Entfernen des Xylols aus der Gewebeprobe;
(viii)(a) Inkontaktbringen der Gewebeprobe mit Xylol für etwa 15 Minuten bis etwa 25 Minuten, und (viii)(b) nach etwa 15 Minuten bis etwa 25 Minuten, Entfernen des Xylols aus der Gewebeprobe;
(ix)(a) Inkontaktbringen der Gewebeprobe mit Xylol für etwa 35 Minuten bis etwa 50 Minuten, und (ix) (b) nach etwa 35 Minuten bis etwa 50 Minuten, Entfernen des Xylols aus der Gewebeprobe;
(x)(a) Inkontaktbringen der Gewebeprobe mit Paraffin für etwa 20 Minuten bis etwa 30 Minuten, und (x)(b) nach etwa 20 Minuten bis etwa 30 Minuten, Entfernen des Paraffins aus der Gewebeprobe;
(xi)(a) Inkontaktbringen der Gewebeprobe mit Paraffin für etwa 20 Minuten bis etwa 30 Minuten, und (xi) (b) nach etwa 20 Minuten bis etwa 30 Minuten, Entfernen des Paraffins aus der Gewebeprobe; und
(xii)(a) Inkontaktbringen der Gewebeprobe mit Paraffin für etwa 20 Minuten bis etwa 30 Minuten, und (xii)(b) nach etwa 20 Minuten bis etwa 30 Minuten, Entfernen des Paraffins aus der Gewebeprobe.

3. Verfahren nach Anspruch 1 oder 2,
wobei der Prozess mindestens etwa 25 %, 33 %, 40 %, 50 %, 60 %, 70 %, 80 %, 90 %, 95 %, 98 %, 99 %, oder 100 % der während eines beliebigen einzelnen Schritts zugeführten Wärme eliminiert; und/oder
wobei der Prozess mindestens etwa 25 %, 33 %, 40 %, 50 %, 60 % oder 70 % der kumulativ während des Prozesses zugeführten Wärme eliminiert.

4. Verfahren nach Anspruch 1 oder 2,
wobei die Gewebeprobe eine Abmessung von mindestens etwa 20 x 10 x 3 mm aufweist;
wobei die Gewebeprobe eine Abmessung von nicht größer als etwa 33 x 26 x 5 mm aufweist; und/oder
wobei die Gewebeprobe eine Abmessung von etwa 20 x 10 x 3 mm bis etwa 33 x 26 x 5 mm aufweist; insbesondere
wobei die Gewebeprobe eine Abmessung von etwa 25 x 20 x 3 mm aufweist, oder
wobei die Gewebeprobe eine Abmessung von etwa 20 x 20 x 4 mm aufweist.

5. Verfahren nach einem der Ansprüche 1, 2 oder 4,
wobei das Ethanol in (ii) etwa 70 % Ethanol ist, das Ethanol in (iii) etwa 90 % Ethanol ist, das Ethanol in (iv) etwa 100 % Ethanol ist, das Ethanol in (v) etwa 100 % Ethanol ist, und das Ethanol in (vi) etwa 100 % Ethanol ist.

6. Verfahren nach Anspruch 1, 2, 4 oder 5,
wobei der Prozess mindestens etwa 25 %, 33 %, 40 %, 50 %, 60 %, 70 %, 80 %, 90 %, 95 %, 98 %, 99 %, oder 100 % der während eines beliebigen einzelnen Schritts zugeführten Wärme eliminiert, und/oder wobei der Prozess mindestens etwa 25 %, 33 %, 40 %, 50 %, 60 % oder 70 % der kumulativ während des Prozesses zugeführten Wärme eliminiert.

7. Verfahren nach einem der Ansprüche 1 bis 3 oder 4 bis 6,
wobei die Gewebeprobe aus der Gruppe bestehend aus Brust-, Kolon-, Uterus-, Nieren-, Pankreas-, Leber-, Lungen-, Haut-, Fett-, Muskel-, Bindegewebe-, Knochen-, Prostata-, Hoden-, Ovar-, Nebennieren-, Schilddrüsen-, Parotis-, Speicheldrüsen-, Lymphknoten- und gastrointestinalen Proben ausgewählt ist.

8. Verfahren nach einem der Ansprüche 1 bis 3 oder 4-7,
wobei das Protokoll eine Gesamtverarbeitungszeit von weniger als etwa 6 Stunden, weniger als etwa 5,5 Stunden oder weniger als etwa 5 Stunden; und weniger als etwa 6,5 Stunden, weniger als etwa 6 Stunden oder weniger als etwa 5,5 Stunden, wenn Füll- und Entleerungszeiten eingeschlossen sind, aufweist.

## Revendications

1. Procédé de traitement d'un échantillon tissulaire destiné à être utilisé en histologie, le procédé comprenant les étapes consistant à :
(i)(a) mettre en contact l'échantillon tissulaire avec du formol tamponné neutre (NBF) à une température d'environ 18 °C à environ 27 °C, avec agitation, et (i)(b) retirer le NBF de l'échantillon tissulaire ;
(ii)(a) mettre en contact l'échantillon tissulaire avec de l'éthanol pendant environ 15 minutes à environ 45 minutes, à une température d'environ 18 °C à environ 27 °C, avec agitation, et (ii)(b) après environ 15 minutes à environ 45 minutes, retirer l'éthanol de l'échantillon tissulaire,
dans lequel l'éthanol est à entre environ 65 % et 75 % d'éthanol, entre environ 66 % et 74 % d'éthanol, entre environ 67 % et 73 % d'éthanol, entre environ 68 % et 72 % d'éthanol ; ou entre environ 69 % et 71 % d'éthanol ;
(iii)(a) mettre en contact l'échantillon tissulaire avec de l'éthanol pendant environ 15 minutes à environ 45 minutes, à une température d'environ 18 °C à environ 27 °C, avec agitation, et (iii)(b) après environ 15 minutes à environ 45 minutes, retirer l'éthanol de l'échantillon tissulaire,
dans lequel l'éthanol est à entre environ 85 % et 95 % d'éthanol, entre environ 86 % et 94 % d'éthanol, entre environ 87 % et 93 % d'éthanol, entre environ 88 % et 92 % d'éthanol ; ou entre environ 89 % et 91 % d'éthanol ;
(iv)(a) mettre en contact l'échantillon tissulaire avec de l'éthanol pendant environ 15 minutes à environ 45 minutes, à une température d'environ 18 °C à environ 27 °C, avec agitation, et (iv)(b) après environ 15 minutes à environ 45 minutes, retirer l'éthanol de l'échantillon tissulaire,
dans lequel l'éthanol est à au moins environ 95 % d'éthanol, au moins environ 96 % d'éthanol, au moins environ 97 % d'éthanol, au moins environ 98 % d'éthanol, ou au moins environ 99 % d'éthanol ;
(v)(a) mettre en contact l'échantillon tissulaire avec de l'éthanol pendant environ 15 minutes à environ 45 minutes, à une température d'environ 18 °C à environ 27 °C, avec agitation, et (v)(b) après environ 15 minutes à environ 45 minutes, retirer l'éthanol de l'échantillon tissulaire,
dans lequel l'éthanol est à au moins environ 95 % d'éthanol, au moins environ 96 % d'éthanol, au moins environ 97 % d'éthanol, au moins environ 98 % d'éthanol, ou au moins environ 99 % d'éthanol ;
(vi)(a) mettre en contact l'échantillon tissulaire avec de l'éthanol pendant environ 15 minutes à environ 45 minutes, à une température d'environ 18 °C à environ 27 °C, avec agitation, et (vi)(b) après environ 15 minutes à environ 45 minutes, retirer l'éthanol de l'échantillon tissulaire,
dans lequel l'éthanol est à au moins environ 95 % d'éthanol, au moins environ 96 % d'éthanol, au moins environ 97 % d'éthanol, au moins environ 98 % d'éthanol, ou au moins environ 99 % d'éthanol ;
(vii)(a) mettre en contact l'échantillon tissulaire avec du xylène pendant environ 10 minutes à environ 40 minutes, à une température d'environ 43 °C à environ 47 °C, avec agitation, et (vii)(b) après environ 10 minutes à environ 40 minutes, retirer le xylène de l'échantillon tissulaire,
dans lequel le xylène est à au moins environ 95 % de xylène, au moins environ 96 % de xylène, au moins environ 97 % de xylène, au moins environ 98 % de xylène, ou au moins environ 99 % de xylène ;
(viii)(a) mettre en contact l'échantillon tissulaire avec du xylène pendant environ 10 minutes à environ 40 minutes, à une température d'environ 43 °C à environ 47 °C, avec agitation, et (viii)(b) après environ 10 minutes à environ 40 minutes, retirer le xylène de l'échantillon tissulaire,
dans lequel le xylène est à au moins environ 95 % de xylène, au moins environ 96 % de xylène, au moins environ 97 % de xylène, au moins environ 98 % de xylène, ou au moins environ 99 % de xylène ;
(ix)(a) mettre en contact l'échantillon tissulaire avec du xylène pendant environ 20 minutes à environ 50 minutes, à une température d'environ 43 °C à environ 47 °C, avec agitation, et (ix)(b) après environ 20 minutes à environ 50 minutes, retirer le xylène de l'échantillon tissulaire,
dans lequel le xylène est à au moins environ 95 % de xylène, au moins environ 96 % de xylène, au moins environ 97 % de xylène, au moins environ 98 % de xylène, ou au moins environ 99 % de xylène ;
(x)(a) mettre en contact l'échantillon tissulaire avec de la paraffine pendant environ 15 minutes à environ 45 minutes, à une température d'environ 60 °C à environ 70 °C, sous vide, avec agitation, et (x)(b) après environ 15 minutes à environ 45 minutes, retirer la paraffine de l'échantillon tissulaire ;
(xi)(a) mettre en contact l'échantillon tissulaire avec de la paraffine pendant environ 15 minutes à environ 45 minutes, à une température d'environ 60 °C à environ 70 °C, sous vide, avec agitation, et (xi)(b) après environ 15 minutes à environ 45 minutes, retirer la paraffine de l'échantillon tissulaire ; et
(xii)(a) mettre en contact l'échantillon tissulaire avec de la paraffine pendant environ 15 minutes à environ 45 minutes, à une température d'environ 60 °C à environ 70 °C, sous vide, avec agitation, et (xii)(b) après environ 15 minutes à environ 45 minutes, retirer la paraffine de l'échantillon tissulaire.

2. Procédé selon la revendication 1, le procédé consistant à :
(ii)(a) mettre en contact l'échantillon tissulaire avec de l'éthanol pendant environ 25 minutes à environ 35 minutes, et (ii) (b) après environ 25 minutes à environ 35 minutes, retirer l'éthanol de l'échantillon tissulaire ;
(iii)(a) mettre en contact l'échantillon tissulaire avec de l'éthanol pendant environ 20 minutes à environ 30 minutes, et (iii) (b) après environ 20 minutes à environ 30 minutes, retirer l'éthanol de l'échantillon tissulaire ;
(iv)(a) mettre en contact l'échantillon tissulaire avec de l'éthanol pendant environ 20 minutes à environ 30 minutes, et (iv)(b) après environ 20 minutes à environ 30 minutes, retirer l'éthanol de l'échantillon tissulaire ;
(v)(a) mettre en contact l'échantillon tissulaire avec de l'éthanol pendant environ 20 minutes à environ 30 minutes, et (v)(b) après environ 20 minutes à environ 30 minutes, retirer l'éthanol de l'échantillon tissulaire ;
(vi)(a) mettre en contact l'échantillon tissulaire avec de l'éthanol pendant environ 20 minutes à environ 30 minutes, et (vi)(b) après environ 20 minutes à environ 30 minutes, retirer l'éthanol de l'échantillon tissulaire ;
(vii)(a) mettre en contact l'échantillon tissulaire avec du xylène pendant environ 15 minutes à environ 25 minutes, et (vii)(b) après environ 15 minutes à environ 25 minutes, retirer le xylène de l'échantillon tissulaire ;
(viii)(a) mettre en contact l'échantillon tissulaire avec du xylène pendant environ 15 minutes à environ 25 minutes, et (viii)(b) après environ 15 minutes à environ 25 minutes, retirer le xylène de l'échantillon tissulaire ;
(ix)(a) mettre en contact l'échantillon tissulaire avec du xylène pendant environ 35 minutes à environ 50 minutes, et (ix) (b) après environ 35 minutes à environ 50 minutes, retirer le xylène de l'échantillon tissulaire ;
(x)(a) mettre en contact l'échantillon tissulaire avec de la paraffine pendant environ 20 minutes à environ 30 minutes, et (x)(b) après environ 20 minutes à environ 30 minutes, retirer la paraffine de l'échantillon tissulaire ;
(xi)(a) mettre en contact l'échantillon tissulaire avec de la paraffine pendant environ 20 minutes à environ 30 minutes, et (xi) (b) après environ 20 minutes à environ 30 minutes, retirer la paraffine de l'échantillon tissulaire ; et
(xii)(a) mettre en contact l'échantillon tissulaire avec de la paraffine pendant environ 20 minutes à environ 30 minutes, et (xii)(b) après environ 20 minutes à environ 30 minutes, retirer la paraffine de l'échantillon tissulaire.

3. Procédé selon la revendication 1 ou la revendication 2,
dans lequel le traitement élimine au moins environ 25 %, 33 %, 40 %, 50 %, 60 %, 70 %, 80 %, 90 %, 95 %, 98 %, 99 %, ou 100 % de la chaleur appliquée au cours d'une étape individuelle quelconque ; et/ou
dans lequel le traitement élimine au moins environ 25 %, 33 %, 40 %, 50 %, 60 %, ou 70 % de la chaleur appliquée cumulativement au cours du traitement.

4. Procédé selon la revendication 1 ou la revendication 2,
dans lequel l'échantillon tissulaire présente une dimension d'au moins environ 20 × 10 × 3 mm ;
dans lequel l'échantillon tissulaire présente une dimension non supérieure à environ 33 x 26 x 5 mm ; et/ou
dans lequel l'échantillon tissulaire présente une dimension allant d'environ 20 × 10 × 3 mm à environ 33 x 26 x 5 mm ;
en particulier
dans lequel l'échantillon tissulaire présente une dimension d'environ 25 × 20 × 3 mm, ou
dans lequel l'échantillon tissulaire présente une dimension d'environ 20 × 20 × 4 mm.

5. Procédé selon la revendication 1, la revendication 2, ou la revendication 4,
dans lequel l'éthanol en (ii) est à environ 70 % d'éthanol, l'éthanol en (iii) est à environ 90 % d'éthanol, l'éthanol en (iv) est à environ 100 % d'éthanol, l'éthanol en (v) est à environ 100 % d'éthanol, et l'éthanol en (vi) est à environ 100 % d'éthanol.

6. Procédé selon la revendication 1, la revendication 2, la revendication 4, ou la revendication 5,
dans lequel le traitement élimine au moins environ 25 %, 33 %, 40 %, 50 %, 60 %, 70 %, 80 %, 90 %, 95 %, 98 %, 99 %, ou 100 % de la chaleur appliquée au cours d'une étape individuelle quelconque, et/ou
dans lequel le traitement élimine au moins environ 25 %, 33 %, 40 %, 50 %, 60 %, ou 70 % de la chaleur appliquée cumulativement au cours du traitement.

7. Procédé selon l'une quelconque des revendications 1 à 3 ou des revendications 4 à 6,
dans lequel l'échantillon tissulaire est sélectionné dans le
groupe consistant en des échantillons de sein, de côlon, d'utérus, de rein, de pancréas, de foie, de poumon, de peau, de graisse, de muscle, de tissu conjonctif, d'os, de prostate, de testicule, d'ovaire, de glande surrénale, de thyroïde, de parotide, de glande salivaire, de ganglion lymphatique, et gastro-intestinaux.

8. Procédé selon l'une quelconque des revendications 1 à 3 ou des revendications 4 à 7,
dans lequel le protocole présente une durée totale de traitement inférieure à environ 6 heures, inférieure à environ 5,5 heures, ou inférieure à environ 5 heures ; et inférieure à environ 6,5 heures, inférieure à environ 6 heures, ou inférieure à environ 5,5 heures lorsque les temps de remplissage et de vidange sont inclus.
